# EUROPÄISCHE PATENTSCHRIFT

(11) **EP 2 580 438 B1**
(45) Veröffentlichungstag und Bekanntmachung des Hinweises auf die Patenterteilung: **17.12.2014**
(21) Anmeldenummer: 11723363.5
(22) Anmeldetag: 16.05.2011
(51) Int. Cl.: F01N 3/20

(54) **FLUIDENTNAHMEEINRICHTUNG**
FLUID EXTRACTING DEVICE
DISPOSITIF DE PRÉLÈVEMENT DE FLUIDE

(30) Priorität: 09.06.2010 DE 102010029841
(43) Veröffentlichungstag der Anmeldung: 17.04.2013
(73) Patentinhaber: Robert Bosch GmbH, 70442 Stuttgart (DE)
(72) Erfinder: BABIC, Vlatko, 50823 Köln (DE); LANDES, Ewgenij, 71686 Remseck (DE); SEMET, Jan, 73553 Alfdorf-Vordersteinenberg (DE); SCHOTT, Steffen, 71701 Schwieberdingen (DE)
(86) Internationale Anmeldenummer: PCT/EP2011/057874
(87) Internationale Veröffentlichungsnummer: WO 2011/154223

(56) Entgegenhaltungen:
- EP-A1- 2 161 421
- DE-A1-102004 048 076

## Beschreibung

### Stand der Technik

Die Erfindung betrifft eine Fluidentnahmeeinrichtung zur Entnahme eines Fluids aus einem Fluidtank, mit einer flexiblen Entnahmeleitung und der Entnahmeleitung zugeordneten Versteifungselementen, wobei die Entnahmeleitung einen, insbesondere materialeinheitlichen, Grundkörper aufweist, in dem zumindest drei Längsausnehmungen ausgebildet sind, von welchen zumindest eine als Fluidausnehmung vorgesehen ist.

Insbesondere bei mit Dieselkraftstoff betriebenen Fahrzeugen ist teilweise zur Einhaltung gesetzlicher Vorschriften beziehungsweise von Umweltauflagen die Einspritzung eines Fluids, beispielsweise eines Reduktionsmittels, insbesondere einer Harnstoff-Wasser-Lösung, in eine Abgasanlage einer Brennkraftmaschine des Fahrzeugs vorgesehen. Die Einspritzung erfolgt dabei vorzugsweise strömungstechnisch vor einem SCR-Katalysator, in welchem eine selektive katalytische Reduktion mithilfe des Reduktionsmittels abläuft. Auf diese Weise werden die in dem Abgas der Brennkraftmaschine, enthaltenen NOₓ-Verbindungen in Wasser und Stickstoff umgewandelt. Das Fahrzeug weist demnach eine Abgasreinigungseinrichtung auf, mittels welcher die Einspritzung in die Abgasanlage bewerkstelligt wird. Diese Abgasreinigungseinrichtung verfügt beispielsweise über die eingangs genannte Fluidentnahmeeinrichtung.

Aus der DE 10 2004 048 076 ist zum Beispiel eine Fluidentnahmevorrichtung mit einem Sperrelement für Dieselkraftstoff bekannt.

Die Entnahmeleitung der Fluidentnahmeeinrichtung mündet zum Beispiel in den Fluidtank der Abgasreinigungseinrichtung, welcher als Reduktionsrnittelspeicher ausgebildet ist, ein. Vorzugsweise ist es dabei vorgesehen, dass die Entnahmeleitung über eine Decke des Reduktionsmittelspeichers in den Fluidtank hinein geführt ist. Über die Entnahmeleitung ist eine Entnahme des in dem Fluidtanks gespeicherten Fluids beziehungsweise Reduktionsmittels möglich.

Die Entnahmeleitung hat die Aufgabe, durch einen, insbesondere gekrümmten, Verlauf mit Überlänge, Längendehnungen beziehungsweise Längenstauchungen zwischen Fluidtankoberseite und Fluidtankboden auszugleichen, um eine zuverlässige Entnahme des Fluids aus dem Fluidtank sicherzustellen, sowie eine Zugentlastung für einen Anschluss der Entnahmeleitung bereitzustellen. Hierbei müssen geometrische Toleranzen sowie Belastungen im Betrieb (wie Druck, Absenkung des Tankbodens durch Alterung bei Temperaturbeanspruchung, Schwimmbelastung und Gravitationskraft des Fluids, aber auch Eisdehnung und dergleichen) kompensiert werden. Bei Überlagerung ungünstiger Extrembelastungen können sich Fluidtankboden und Fluidtankoberseite soweit auf einander zu bewegen, dass die Entnahmeleitung derart gestaucht wird, dass sie knickt. In diesem Fall kann durch die in der Entnahmeleitung vorgesehene Fluidausnehmung kein Fluid mehr gefördert werden.

Die Entnahmeeinrichtung oder der Fluidtank ist vorzugsweise mittels einer Heizung beheizbar. Die Heizung hat die Aufgabe das in dem Fluidtank befindliche Fluid bei Temperaturen unterhalb von dessen Gefrierpunkt flüssig zu halten beziehungsweise bereits gefrorenes Fluid aufzutauen, um die Entnahme aus dem Fluidtank zu ermöglichen. Damit aufgetautes Fluid möglichst schnell aus dem Fluidtank gefördert werden kann, ist auch die Entnahmeleitung beheizt beziehungsweise beheizbär. Die Heizung weist beispielsweise ein Heizelement auf, welches in Form einer Heizungslitze ausgeführt ist. Diese Heizungslitze dient als Stromleitung und zum Beheizen der Entnahmeleitung.

Beim Abstellen des Fahrzeugs wird die Brennkraftmaschine nachfolgend zeitweise nicht mehr betrieben, womit sie und die ihr zugeordnete Abgasanlage sowie Abgasreinigungseinrichtung abkühlen. Dabei geht das Fluid bei niedrigen Umgebungstemperaturen aus dem flüssigen in den festen Aggregatzustand über. Beim Einfrieren bildet sich häufig eine von gefrorenem Fluid umschlossene Fluidblase, also ein Bereich, in welchem noch flüssiges Fluid vorliegt. Eine solche Fluidblase entsteht oft im Bereich der Heizung, welche zusammen mit anderen Komponenten eine Restwärmespeicherquelle darstellt. Die Fluidblase entsteht teilweise auch im und/oder oberhalb eines Fluidschwerpunkts, wobei ihre genaue Lage von vielen weiteren Faktoren abhängt. Beim Durchfrieren der von gefrorenem Fluid eingeschlossenen Fluidblase entsteht eine Eisverschiebung, bedingt durch die beim Einfrieren des in der Fluidblase vorhandenen Fluids auftretende Volumenvergrößerung. Dadurch kann es insbesondere durch scharfe Eiskanten zu Beschädigung der Entnahmeleitung beziehungsweise eines Bereichs der Entnahmeleitung, insbesondere der Heizung, kommen.

Die vorstehend beschriebene Funktionsstörung durch Knickung wird durch die aus dem Stand der Technik bekannte Anordnung von Heizelementen in und an dem Grundkörper der Entnahmeleitung gefördert. Üblicherweise sind ein Heizelement in dem Grundkörper und ein weiteres Heizelement außerhalb des Grundkörpers vorgesehen, wobei letzteres mittels eines Schrumpfschlauches an dem Grundkörper befestigt ist. Das beschriebene Problem der Knickung wird zusätzlich durch den Schrumpfschlauch begünstigt, bei welchem beispielsweise ein Faltenwurf am Innenradius einer Biegung der Entnahmeleitung auftreten kann. Es ist demnach zur Gewährleistung von axialen Relativbewegungen zwischen Einspannpunkten der Entnahmeleitung, wobei sich einer der Einspannpunkte beispielsweise am Fluidtankboden und ein zweiter der Einspannpunkte an der Fluidtankoberseite befindet, notwendig, dass ein erforderliches Längenübermaß der Entnahmeleitung für die Zugentlastung vorgesehen ist, um ein Abreißen oder Herausreißen bei zunehmendem Abstand der Einspannpunkte zu vermeiden und gleichzeitig ein zuverlässiges Entnehmen des Fluids aus dem Fluidtank sicherzustellen.

Dies ist jedoch problematisch, wenn das erforderliche Längenübermaß der Entnahmeleitung zwischen den Einspannpunkten konstant bleiben sollen, insbesondere weil gleiche oder zumindest ähnliche Biegeradien der Entnahmeleitung zu erwarten sind, jedoch die Abstände zwischen den beiden Einspannpunkten minimiert werden müssen, beispielsweise zur Erreichung einer geringeren Fluidtankhöhe. Bei geringen Fluidtankhöhen und gleichzeitig minimalen Abständen zwischen den Einspannpunkten aufgrund von Geometriebedingungen und Bewegungen der Entnahmeleitung im Betrieb der Fluidentnahmeeinrichtung wird bei aus dem Stand der Technik bekannten Entnahmeleitungen, welche einen außenseitigen Schrumpfschlauch auf dem Grundkörper aufweisen, die Entnahmeleitung an zumindest einer Stelle extrem geknickt (minimaler Biegeradius am Innendurchmesser der Knickung) und die Fluidausnehmung durch die Knickung unterbrochen, während andere Bereiche der Entnahmeleitung lediglich geringe Knickungeh beziehungsweise Biegungen erfahren.

### Offenbarung der Erfindung

Die Fluidentnahmeeinrichtung mit den Merkmalen des Anspruchs 1 weist dagegen den Vorteil auf, dass die Flexibilität der Entnahmeleitung erhöht ist und somit einfacher geringe Fluidtankhöhen realisierbar sind beziehungsweise eine Anordnung der Entnahmeleitung flexibler möglich ist. Dies wird erfindungsgemäß erreicht, indem zumindest zwei der Versteifungselemente in den Längsausnehmungen angeordnet sind. Vorteilhafterweise sind dabei jedem der Versteifungselemente jeweils eine der Längsausnehmungen zugeordnet. Der Grundkörper, welcher insbesondere materialeinheitlich ausgebildet ist, weist demnach zumindest zwei Längsausnehmungen auf. Diese sind bevorzugt voneinander beabstandet, so dass sie nicht ineinander eingreifen. Die Längsausnehmungen können die Entnahmeleitung in deren Längsrichtung vollständig durchgreifen oder alternativ als partielle Längsausnehmungen vorliegen. Letztere durchgreifen die Entnahmeleitung in Längsrichtung lediglich bereichsweise. Dabei ist es erfindungsgemäß vorgesehen, dass stets mindestens zwei Versteifungselemente an zumindest einer bestimmten Axialposition der Entnahmeleitung vorliegen. Es ist demnach nicht vorgesehen, dass die zumindest zwei Versteifungselemente in Längsrichtung voneinander beabstandet vorgesehen sind. Anders ausgedrückt betrifft die Erfindung eine Fluidentnahmeeinrichtung zur Entnahme eines Fluids aus einem Fluidtank, mit einer flexiblen Entnahmeleitung, in deren, insbesondere materialeinheitlichem, Grundkörper zumindest eine fluidführende Fluidausnehmung ausgebildet ist. Dabei sollen in dem Grundkörper mindestens zwei, in Längsausnehmungen des Grundkörpers aufgenommene Versteifungselemente vorgesehen sein.

Dabei ist in besonders vorteilhafter Weise lediglich eine einzige fluidführende Fluidausnehmung in dem Grundkörper ausgebildet und es sind gleichzeitig zumindest zwei, bevorzugt genau zwei, Versteifungselemente in dem Grundkörper vorgesehen.

Unter Versteifungselement ist erfindungsgemäß ein Element zu verstehen, welches die Entnahmeleitung beziehungsweise deren Grundkörper im Vergleich zu einer Ausführung des Grundkörpers, welche lediglich die Längsausnehmungen aufweist, versteift. Die Versteifungselemente können daher prinzipiell beliebige Elemente sein, welche in den Längsausnehmungen angeordnet sind. Beispielsweise können die Versteifungselemente beziehungsweise zumindest eines der Versteifungselemente Heizelemente der vorstehend angesprochenen Art sein.

Auf diese Weise muss kein zusätzliches Versteifungselement mit einem Schrumpfschlauch an dem Grundkörper der Entnahmeleitung befestigt werden. Es ist ausreichend, wenn lediglich die mindestens zwei Versteifungselemente in dem Grundkörper aufgenommen sind.

Eine Weiterbildung der Erfindung sieht vor, dass zumindest eines der Versteifungselemente ein einer Heizung der Entnahmeleitung zugeordnetes Heizelement ist. Wie bereits vorstehend angedeutet, kann der Entnahmeleitung die Heizung mit dem zumindest einen Heizelement zugeordnet sein, um auch bei tiefen Umgebungstemperaturen ein zuverlässiges Entnehmen des Fluids aus dem Fluidtank zu ermöglichen. Bei aus dem Stand der Technik bekannten Fluidentnahmeeinrichtungen beziehungsweise Entnahmeleitungen ist das Heizelement mittels des Schrumpfschlauchs auf dem Grundkörper befestigt. Dies ist aus den vorstehend genannten Gründen jedoch nicht vorteilhaft. Daher ist es vorgesehen, dass zumindest eines der mindestens zwei Versteifungselemente als Heizelement ausgebildet ist. Das Heizelement ist beispielsweise ein elektrisches Heizelement, insbesondere eine Heizungslitze. Besonders bevorzugt ist es, wenn alle Versteifungselemente als Heizelement vorliegen. Wenn mindestens eines der Versteifungselemente ein Heizelement und mindestens ein anderes der Versteifungselemente ein Heizelement ist, so ist vorteilhafterweise darauf zu achten, dass die beiden Versteifungselemente gleiche oder zumindest ähnliche Eigenschaften, insbesondere hinsichtlich ihrer Steifigkeit beziehungsweise Dehnfähigkeit, aufweisen.

Eine Weiterbildung der Erfindung sieht vor, dass eine Wandung des Grundkörpers eine Außenseite der Entnahmeleitung bildet. Der Grundkörper ist demnach zuäußerst an der Entnahmeleitung vorgesehen. Es ist kein weiteres Element, insbesondere kein Schrumpfschlauch vorgesehen, welches den Grundkörper umgibt. Die Wandung des Grundkörpers bildet demnach die Außenseite der Entnahmeleitung.

Eine Weiterbildung der Erfindung sieht vor, dass die Versteifungselemente symmetrisch zu der Fluidausnehmung angeordnet sind. Um besonders vorteilhafte

Knickeigenschaften der Entnahmeleitung zu erreichen, ist die symmetrische Anordnung besonders gut geeignet. Unter symmetrischer Anordnung ist beispielsweise eine Anordnung zu verstehen, bei welcher die Versteifungselemente bezüglich einer gedachten, den Mittelpunkt der Fluidausnehmung schneidenden Gerade symmetrisch, insbesondere achsensymmetrisch, angeordnet sind. Zusätzlich oder alternativ kann es vorgesehen sein, dass zumindest zwei der Versteifungselemente, vorzugweise alle Versteifungselemente, dieselbe oder zumindest eine ähnliche Steifigkeit und damit dieselben Knickeigenschaften aufweisen.

Eine Weiterbildung der Erfindung sieht vor, dass zumindest eine der Längsausnehmungen einen die Außenseite der Entnahmeleitung durchgreifenden, zumindest über ein Teilstück der einen Längsausnehmung verlaufenden Schlitz aufweist. Bei einer solchen Ausgestaltung der Fluidentnahmeeinrichtung beziehungsweise der Entnahmeleitung ist eine Montage des Versteifungselements besonders einfach möglich. Es kann in diesem Fall durch den Schlitz in die Längsausnehmung eingebracht werden, weil der Schlitz die Außenseite der Entnahmeleitung durchgreift. Es kann dabei vorgesehen sein, dass der Schlitz sich über die gesamte Längserstreckung der Längsausnehmung erstreckt. Zumindest ist er jedoch über das Teilstück der Längsausnehmung vorgesehen.

Eine Weiterbildung der Erfindung sieht vor, dass zumindest eines der Versteifungselemente durch eine der entsprechenden Längsausnehmung zugeordnete, die Außenseite der Entnahmeleitung durchgreifende Ausnehmung verläuft. Insbesondere wenn das Versteifungselement als Heizelement ausgeführt ist, muss es aus der Entnahmeleitung heraus geführt sein, um es mit Heizenergie zu versorgen. Zu diesem Zweck kann es vorgesehen sein, das die Längsausnehmung zumindest eine der Stirnseiten der Entnahmeleitung durchgreift und das Versteifungselement auf diese Weise aus der Entnahmeleitung heraus führbar ist. Alternativ kann vorgesehen sein, dass die die Außenseite der Entnahmeleitung durchgreifende Ausnehmung vorgesehen ist, wobei die Ausnehmung vorzugsweise in einer Mantelfläche der Entnahmeleitung beziehungsweise des Grundkörpers vorgesehen ist. Die Ausnehmung ist dabei der Längsausnehmung zugeordnet, durch welche das Versteifungselement verläuft. Durch die Ausnehmung kann nun das Versteifungselement aus der Entnahmeleitung beziehungsweise dem Grundkörper heraus geführt werden.

Eine Weiterbildung der Erfindung sieht vor, dass der Grundkörper durch ein Spritzgießverfahren hergestellt ist und die Versteifungselemente in dem Grundkörper umspritzt vorliegen. Auf diese Weise ist eine besonders einfache Kopplung zwischen Grundkörper und Versteifungselement herstellbar. Insbesondere kann das Versteifungselement stoffschlüssig mit dem Grundkörper verbunden sein. Dabei ist der Grundkörper bevorzugt mittels des Spritzgießverfahrens hergestellt, wobei die Versteifungselemente während des Spritzgießens derart angeordnet sind, dass sie nachfolgend in dem Grundkörper aufgenommen sind.

Eine Weiterbildung der Erfindung sieht vor, dass im Bereich der Ausnehmung ein zumindest eines der Versteifungselemente abstützendes Führungselement vorgesehen ist. Das Führungselement ist demnach in dem Bereich der Entnahmeleitung vorgesehen, in welchem das Versteifungselement beziehungsweise das Heizelement aus dem Grundkörper heraus geführt ist. Das Führungselement ist zum Abstützen zumindest eines der Versteifungselemente vorgesehen. Es soll demnach, insbesondere bei Auftreten von Verschiebungen der Entnahmeleitung, eine Beschädigung des Versteifungselements verhindern.

Eine Weiterbildung der Erfindung sieht vor, dass die Entnahmeleitung an oder in dem Führungselement beweglich, insbesondere längsbeweglich, gelagert ist. Durch die bewegliche Lagerung der Entnahmeleitung beziehungsweise des Grundkörpers an oder in dem Führungselement können Beschädigungen des Versteifungselements, welches aus der Entnahmeleitung heraus geführt ist, vermieden werden. Besonders vorteilhaft ist es, wenn lediglich eine Längsbewegung der Entnahmeleitung relativ zu dem Führungselement zugelassen ist. Besonders bevorzugt ist das Führungselement ortsfest und die Entnahmeleitung längsbeweglich zu diesem angeordnet. Insbesondere kann die Entnahmeleitung mittels des Führungselements an weiteren Bereichen der Fluidentnahmeeinrichtung oder an dem Fluidtank befestigt sein.

Eine Weiterbildung der Erfindung sieht vor, dass ein Vorsprung des Führungselements zur Bildung einer Verdrehsicherung in die Ausnehmung eingreift. Um ein zuverlässiges Führen beziehungsweise Abstützen des Versteifungselements durch das Führungselement zu erreichen, ist es notwendig, dass die Entnahmeleitung sich bezüglich des Führungselements nicht verdrehen kann, also lediglich längsbeweglich zu diesem gelagert ist. Zur Realisierung einer solchen Lagerung ist die Verdrehsicherung vorgesehen, welche dadurch gebildet ist, dass der Vorsprung des Führungselements in ein Gegenelement der Entnahmeleitung beziehungsweise des Grundkörpers eingreift, wobei das Gegenelement beispielsweise die Ausnehmung ist.

Die Erfindung wird nachfolgend anhand der in der Zeichnung dargestellten Ausführungsbeispiele erläutert, wobei keine Beschränkung der Erfindung erfolgt. Dabei zeigen:
Figur 1 eine Entnahmeleitung einer Fluidentnahmeeinrichtung,
Figur 2 eine erfindungsgemäße Entnahmeleitung,
Figur 3 die an einem Führungselement längsbeweglich gelagerte Entnahmeleitung in einer ersten Ansicht, und
Figur 4 die aus der Figur 3 bekannte Entnahmeleitung und das Führungselement in einer weiteren Ansicht.

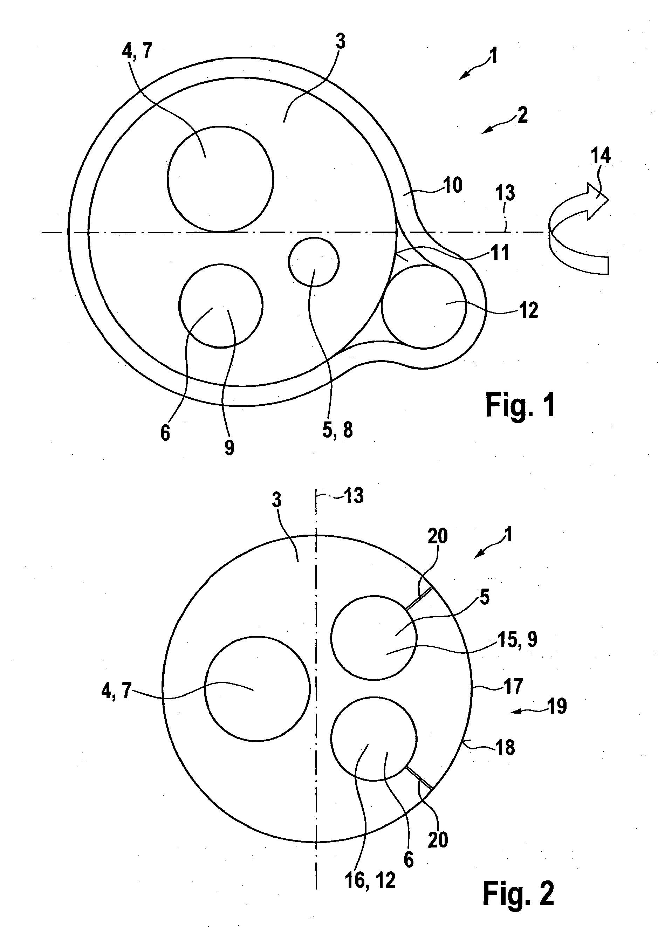

Die Figur 1 zeigt eine Entnahmeleitung 1 einer hier nicht weiter im Detail dargestellten Fluidentnahmeeinrichtung 2. Die Entnahmeleitung 1 ist üblicherweise zumindest bereichsweise in einem Fluidtank (hier nicht dargestellt) angeordnet. Dabei ist sie an einem ersten Einspannpunkt, vorzugsweise auf einem Fluidtankboden, und einem zweiten Einspannpunkt, vorzugsweise an einem Fluidtankdeckel, befestigt. Die Entnahmeleitung 1 ist flexibel, insbesondere um Größenänderungen des Fluidtanks, beispielsweise durch Wärme- beziehungsweise Kälteeinwirkung, ausgleichen zu können. Die Entnahmeleitung 1 besteht aus einem Grundkörper 3, welcher vorzugsweise materialeinheitlich ausgebildet ist, in welchem drei Längsausnehmungen 4, 5 und 6 vorgesehen sind. Die Längsausnehmungen 4 und 5 dienen dabei als Fluidausnehmungen 7 und 8. Das bedeutet, dass durch sie hindurch Fluid förderbar ist, beispielsweise um es dem Fluidtank zu entnehmen. In der Längsausnehmung 6 ist dagegen ein Heizelement 9 vorgesehen. Weil die Heizleistung des einzelnen Heizelements 9 üblicherweise nicht ausreichend ist, um auch bei tiefen Temperaturen das Entnehmen des Fluids durch die Entnahmeleitung 1 sicherzustellen, ist mittels eines Schrumpfschlauches 10 auf einer Außenseite 11 des Grundkörpers 3 der Entnahmeleitung 1 ein weiteres Heizelement 12 befestigt.

Bedingt durch Änderungen der Entfernung zwischen den Einspannpunkten der Entnahmeleitung 1, beispielsweise durch eine Größenänderung des Fluidtanks, kann es zu einer Biegung der Entnahmeleitung 1 kommen. Die Biegung erfolgt dabei um eine Biegeachse 13 und ist durch den Pfeil 14 gekennzeichnet. Die Position und Ausrichtung der Biegeachse 13 ist dabei durch die Anordnung der Längsausnehmungen 4, 5 und 6 und des Heizelements 12 zueinander, die Steifigkeit der Heizelemente 9 und 12 und/oder den Schrumpfschlauch 10 beeinflusst. Die in der Figur 1 gezeigte Ausführung der Entnahmeleitung 1 ist insofern nachteilig, als dass sie insbesondere bei geringen Fluidtankhöhen bei starken Änderungen der Entfernung zwischen den Einspannpunkten der Entnahmeleitung 1 bedingt durch die mehrteilige Ausführung der Entnahmeleitung 1, bestehend aus dem Grundkörper 3, dem externen Heizelement 12 und dem Schrumpfschlauch 10, derart gebogen werden kann, dass sie abknickt. Damit ist die Förderung des Fluids durch die Fluidausnehmungen 7 und 8 nicht mehr möglich.

Aus diesem Grund wird die in der Figur 2 vorgestellte Ausführung der Entnahmeleitung 1 vorgeschlagen. In der Figur 2 entsprechen die Bezugszeichen den in der Figur 1 verwendeten. Insofern sei auch auf die vorstehenden Ausführungen verwiesen. Dabei können durch Änderung der Lage der Heizelemente 9 und 12 zu den Fluidausnehmungen 7 und 8 und/oder zu der Biegeachse 13 und/oder durch Weglassen des Schrumpfschlauchs 10 und/oder durch lediglich partielles Aufbringen des Schrumpfschlauchs 10 auf den Grundkörper 3 und/oder durch Drehung der Entnahmeleitung 1 um ihre Achse und/oder durch Verlagerung des Heizelements 12 in eine der Längsausnehmungen 4, 5 und 6 und/oder eine Änderung der Lage der Längsausnehmungen 4, 5 und 6 zueinander die Biegeeigenschaften der Entnahmeleitung 1 verbessert werden, so dass ein kleinerer Biegeradius möglich ist, bevor es zu einem Knicken der Entnahmeleitung 1 und somit zu einem Blockieren der Fluidausnehmung 7 kommt. Bei dem anhand der Figur 2 dargestellten Ausführungsbeispiel der Entnahmeleitung 1 ist lediglich die Längsausnehmung 4 als Fluidausnehmung 7 ausgebildet. Die Längsausnehmung 5 ist dagegen, ebenso wie die Längsausnehmung 6, zur Aufnahme jeweils eines Versteifungselements 15 beziehungsweise 16 vorgesehen. Die Versteifungselemente 15 und 16 liegen dabei gleichzeitig an derselben Längsposition der Entnahmeleitung 1 vor.

Im Vergleich zu der in der Figur 1 dargestellten Entnahmeleitung 1 entfällt somit der Schrumpfschlauch 10. Damit bildet eine Wandung 17 eine Außenseite 18 nicht nur des Grundkörpers 3 sondern auch der Entnahmeleitung 1. Die Versteifungselemente 15 und 16 dienen einer Versteifung des Grundkörpers 3 beziehungsweise der Entnahmeleitung 1. Dabei ist Versteifungselement so zu verstehen, dass mit diesen eine Versteifung gegenüber einer Entnahmeleitung 1 erzielt ist, in welcher die Längsausnehmungen 5 und 6 nicht mit den Versteifungselementen 15 und 16 ausgefüllt sind.

Die Versteifungselemente 15 und 16 können als Heizelemente 9 und 12 einer Heizung 19 der Entnahmeleitung 1 ausgeführt sein. Sie dienen demnach sowohl dem Beheizen der Entnahmeleitung 1 als auch deren Versteifung. Auf diese Weise wird, insbesondere durch den Entfall des Schrumpfschlauchs 10, ermöglicht, dass die Entnahmeleitung 1 deutlich flexibler ist, als die anhand der Figur 1 beschriebene, obwohl weiterhin zwei Heizelemente 9 und 12 vorgesehen sind.

Aufgrund der nun gesteigerten Flexibilität der Entnahmeleitung 1 können entlang eines Verlaufs der Entnahmeleitung 1, insbesondere innerhalb des Fluidtanks, größere und auf mehrere Positionen gleichmäßig verteilte Biegeradien realisiert werden. Auf diese Weise wird das Problem des Knickens der Entnahmeleitung 1 und somit des Blockierens der Fluidausnehmung 7 gelöst. Es sind somit geringere Abstände zwischen den Einspannpunkten der Entnahmeleitung 1 realisierbar, weil der minimal auftretende Krümmungsradius der Entnahmeleitung 1 größer wird und somit das Abdecken der Entnahmeleitung 1 vermieden wird.

Durch die größere Flexibilität der Entnahmeleitung 1 wird die Gestaltungsfreiheit bei der Anordnung der Entnahmeleitung 1 deutlich vergrößert. Beispielsweise kann nun die Entnahmeleitung 1 durch eine Klemmung mit einer Schelle an dem Deckel des Fluidtanks befestigt werden, wodurch insbesondere Querkräfte reduziert werden. Durch die Integration der Heizelemente 9 und 12 in den Grundkörper 3 der Entnahmeleitung 1 werden diese vor scharfen Eiskanten geschützt. Zudem ist durch den Entfall des Schrumpfschlauchs eine Kostenreduktion gegeben. Um die Integration des Heizelements 12 in den Grundkörper 3 zu ermöglichen, entfällt die Fluidausnehmung 8. Vorteilhafterweise ist in der Entnahmeleitung 1 somit lediglich eine einzige Fluidausnehmung 7 vorgesehen.

Durch eine gezielte Anordnung der Längsausnehmungen 4, 5 und 6 beziehungsweise der Versteifungselemente 15 und 16 zu der Fluidausnehmung 7, ist die Anordnung der Biegeachse 13 auf einfache Weise beeinflussbar. Besonders vorteilhaft ist es, wenn die Versteifungselemente 15 und 16 symmetrisch zu der Fluidausnehmung 7 angeordnet sind. Dies ist in der Figur 2 gezeigt. Durch entsprechende Anordnung der Biegeachse 13 ist es möglich, eine Minimierung des kleinstmöglichen zulässigen Biegeradius der Entnahmeleitung 1 zu erzielen. Dadurch können geringere Tankhöhen mit besserem Längenausgleich und zuverlässiger Förderung des Fluids realisiert werden.

Durch die Integration der Heizelemente 9 und 12 in die Längsausnehmungen 5 und 6 sind sie, wie bereits ausgeführt, vor scharfen Eiskanten in einer Umgebung der Entnahmeleitung 1 und anderen mechanischen Einwirkungen, wie beispielsweise einer Reibung an einem Topf des Fluidtanks und/öder einer Wandung des Fluidtanks und/oder anderen die Entnahmeleitung 1 umgebenden Bauteilen, geschützt. Durch den Entfall des Schrumpfschlauchs 10 und des damit verbundenen Faltenwurfs am inneren Biegeradius der Entnahmeleitung 1 wird die primäre Ursache für frühzeitiges Versagen durch Abknicken eliminiert, so dass auch bei starker Biegung der Entnahmeleitung 1 ein ausreichender Restquerschnitt der Fluidausnehmung 7 zur Förderung des Fluids zur Verfügung steht. Auch kann die Entnahmeleitung 1 durch die höhere Flexibilität vorteilhafter in dem Fluidtank angeordnet werden, wobei eine Biegung der Entnahmeleitung 1 vorzugsweise derart erfolgt, das die Fluidausnehmung 7 auf der Seite der Biegeachse 13 liegt, in welchem eine Dehnung der Entnahmeleitung 1 erfolgt. Somit werden lediglich die Versteifungselemente 15 und 16 gestaucht. Noch verbleibende Faltenbildung durch die Biegung der Entnahmeleitung 1 kann zusätzlich durch den Verlauf der Versteifungselemente 15 und 16 zumindest teilweise kompensiert werden. Durch den Entfall des Schrumpfschlauchs 10 werden weiterhin Querkräfte auf Schnittstellen der Entnahmeleitung 1 reduziert.

Zum Einbringen der Versteifungselemente 15 und 16 in die Längsausnehmungen 5 und 6 ist beispielsweise jeweils ein Schlitz 20 vorgesehen, welcher der jeweiligen Längsausnehmung 5 oder 6 zugeordnet ist und die Außenseite 18 der Entnahmeleitung 1 durchgreift. Die in der Figur 2 dargestellten Schlitze 20 können beispielsweise bei einer Herstellung der Entnahmeleitung 1 gleichzeitig mit zwei Messern hergestellt werden, so dass keine zusätzlichen Herstellungskosten entstehen.

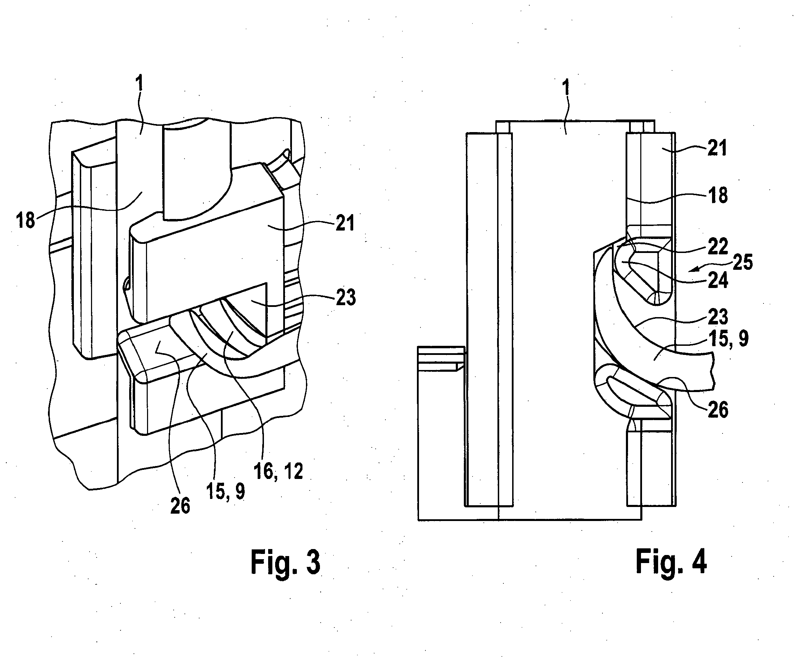

Die Figur 3 zeigt die Entnahmeleitung 1 mit einem Führungselement 21. Das Führungselement 21 umgibt die Entnahmeleitung 1 zumindest bereichsweise, insbesondere in Umfangsrichtung. Die Entnahmeleitung 1 ist an beziehungsweise in dem Führungselement 21 längsbeweglich gelagert. Bevorzugt ist das Führungselement 21 bezüglich des Fluidtanks ortsfest, während die Entnahmeleitung 1 sich in dem Führungselement 21 bewegen kann. Das Führungselement 21 ist im Bereich einer hier nicht erkennbaren Ausnehmung 22 vorgesehen, welche die Außenseite 18 durchgreift und zum Herausführen der Versteifungselemente 15 und/oder 16 aus den Längsausnehmungen 5 und/oder 6 dient. Das Führungselement 21 dient zur Abstützung der Versteifungselemente 15 und 16. Es weist zu diesem Zweck beispielsweise eine randoffene Führung 23 auf, durch welche die Versteifungselemente 15 und 16 geführt sind. Die Führung 23 ist dabei derart bemessen, dass die Versteifungselemente 15 und 16 nicht aus ihr heraus gelangen können.

Die Figur 4 zeigt eine weitere Ansicht der Entnahmeleitung 1 und des Führungselements 21. Dabei ist zu erkennen, dass das Führungselement 21 einen Vorsprung 24 aufweist, welcher in die Ausnehmung 22 zumindest bereichsweise eingreift. Durch dieses Eingreifen ist eine Verdrehsicherung 25 gebildet, welche ein Verdrehen der Entnahmeleitung 1 in dem Führungselement 21 verhindert. Auf diese Weise ist auch ein Verdrehen beziehungsweise ein Abreißen durch Verdrehen der Versteifungselemente 15 und 16 verhindert. Mittels des Führungselements 21 wird demnach auch eine Zugentlastung für die Versteifungselemente 15 und 16 realisiert. Gleichzeitig wird auch ein Herausrutschen der Versteifungselemente 15 und 16 aus den Längsausnehmungen 5 und des 6 der Entnahmeleitung 1 verhindert, indem sie in axialer Richtung der Entnahmeleitung 1 auf einer Abstützfläche 26 des Führungselements 21 auffliegen.

## Patentansprüche

1. Fluidentnahmeeinrichtung (2) zur Entnahme eines Fluids aus einem Fluidtank, mit einer flexiblen Entnahmeleitung (1) und der Entnahmeleitung (1) zugeordneten Versteifungselementen (15,16), wobei die Entnahmeleitung (1) einen, insbesondere mäterialeinheitlichen, Grundkörper (3) aufweist, in dem zumindest drei Längsausnehmungen (4,5,6) ausgebildet sind, von welchen **genau** eine als **fluidführende** Fluidausnehmung (7) vorgesehen ist, **dadurch gekennzeichnet, dass** zumindest zwei der Versteifungselemente (15,16) in den **zumindest zwei weiteren** Längsausnehmungen (5,6) angeordnet sind.

2. Fluidentnahmeeinrichtung nach Anspruch **1, dadurch gekennzeichnet, dass** zumindest eines der Versteifungselemente (15,16) ein einer Heizung (19) der Entnahmeleitung (1) zugeordnetes Heizelement (9,12) ist.

3. Fluidentnahmeeinrichtung nach einem der vorhergehenden Ansprüche, **dadurch gekennzeichnet,** das eine Wandung (17) des Grundkörpers (3) eine Außenseite (18) der Entnahmeleitung (1) bildet.

4. Fluidentnahmeeinrichtung nach einem der vorhergehenden Ansprüche, **dadurch gekennzeichnet, dass** die Versteifungselemente (15,16) symmetrisch zu der Fluidausnehmung (7) angeordnet sind.

5. Fluidentnahmeeinrichtung nach Anspruch 3, **dadurch gekennzeichnet, dass** zumindest eine der Längsausnehmungen (5,6) einen die Außenseite (18) der Entnahmeleitung (1) durchgreifenden, zumindest über ein Teilstück der einen Längsausnehmung (5,6) verlaufenden Schlitz (20) aufweist.

6. Fluidentnahmeeinrichtung nach einem der vorhergehenden Ansprüche, **dadurch gekennzeichnet, dass** zumindest eines der Versteifungselemente (15,16) durch eine der entsprechenden Längsausnehmung (5,6) zugeordnete, die Außenseite (18) der Entnahmeleitung (1) durchgreifende Ausnehmung (22) verläuft.

7. Fluidentnahmeeinrichtung nach einem der vorhergehenden Ansprüche, **dadurch gekennzeichnet, dass** der Grundkörper (3) durch ein Spritzgießverfahren hergestellt ist und die Versteifungselemente (15,16) in dem Grundkörper (3) umspritzt vorliegen.

8. Fluidentnahmeeinrichtung nach einem der Ansprüche 6 und 7, **dadurch gekennzeichnet, dass** im Bereich der Ausnehmung (22) ein zumindest eines der Versteifungselemente (15,16) abstützendes Führungselement (31) vorgesehen ist.

9. Fluidentnahmeeinrichtung nach Anspruch 8, **dadurch gekennzeichnet, dass** die Entnahmeleitung (1) an oder in dem Führungselement (21) beweglich, insbesondere längsbeweglich, gelagert ist.

10. Fluidentnahmeeinrichtung nach einem der Ansprüche 8 und 9, **dadurch gekennzeichnet, dass** ein Vorsprung (24) des Führungselements (21) zur Bildung einer Verdrehsicherung (24) in die Ausnehmung (22) eingreift.

## Claims

1. Fluid extraction device (2) for extracting a fluid from a fluid tank, having a flexible extraction line (1) and reinforcing elements (15, 16) which are assigned to the extraction line (1), the extraction line (1) having a main body (3) which is made, in particular, from a single material and in which at least three longitudinal recesses (4, 5, 6) are formed, of which precisely one is provided as a fluid-conducting fluid recess (7), **characterized in that** at least two of the reinforcing elements (15, 16) are arranged in the at least two further longitudinal recesses (5, 6).

2. Fluid extraction device according to Claim 1, **characterized in that** at least one of the reinforcing elements (15, 16) is a heating element (9, 12) which is assigned to a heater (19) of the extraction line (1).

3. Fluid extraction device according to one of the preceding claims, **characterized in that** a wall (17) of the main body (3) forms an outer side (18) of the extraction line (1).

4. Fluid extraction device according to one of the preceding claims, **characterized in that** the reinforcing elements (15, 16) are arranged symmetrically with respect to the fluid recess (7).

5. Fluid extraction device according to Claim 3, **characterized in that** at least one of the longitudinal recesses (5, 6) has a slot (20) which reaches through the outer side (18) of the extraction line (1) and runs at least over a part of one longitudinal recess (5, 6).

6. Fluid extraction device according to one of the preceding claims, **characterized in that** at least one of the reinforcing elements (15, 16) runs through a recess (22) which is assigned to the corresponding longitudinal recess (5, 6) and reaches through the outer side (18) of the extraction line (1).

7. Fluid extraction device according to one of the preceding claims, **characterized in that** the main body (3) is produced by way of an injection moulding process and the reinforcing elements (15, 16) are present in injection moulded encapsulated form in the main body (3).

8. Fluid extraction device according to either of Claims 6 and 7, **characterized in that** a guide element (31) which supports at least one of the reinforcing elements (15, 16) is provided in the region of the recess (22).

9. Fluid extraction device according to Claim 8, **characterized in that** the extraction line (1) is mounted on or in the guide element (21) such that it can be moved, in particular can be moved longitudinally.

10. Fluid extraction device according to either of Claims 8 and 9, **characterized in that** a projection (24) of the guide element (21) engages into the recess (22) in order to form an anti-rotation safeguard (24).

## Revendications

1. Dispositif de prélèvement de fluide (2) pour prélever un fluide d'un réservoir de fluide, comprenant une conduite de prélèvement flexible (1) et des éléments de renforcement (15, 16) associés à la conduite de prélèvement (1), la conduite de prélèvement (1) comprenant un corps de base (3), en particulier venu de matière, dans lequel sont réalisés au moins trois évidements longitudinaux (4, 5, 6), parmi lesquels exactement un est prévu en tant qu'évidement de fluide (7) guidant le fluide, **caractérisé en ce qu'**au moins deux des éléments de renforcement (15, 16) sont disposés dans les au moins deux autres évidements longitudinaux (5, 6).

2. Dispositif de prélèvement de fluide selon la revendication 1, **caractérisé en ce qu'**au moins l'un des éléments de renforcement (15, 16) est un élément chauffant (9, 12) associé à un chauffage (19) de la conduite de prélèvement (1).

3. Dispositif de prélèvement de fluide selon l'une quelconque des revendications précédentes, **caractérisé en ce qu'**une paroi (17) du corps de base (3) forme un côté extérieur (18) de la conduite de prélèvement (1).

4. Dispositif de prélèvement de fluide selon l'une quelconque des revendications précédentes, **caractérisé en ce que** les éléments de renforcement (15, 16) sont disposés symétriquement par rapport à l'évidement de fluide (7).

5. Dispositif de prélèvement de fluide selon la revendication 3, **caractérisé en ce qu'**au moins l'un des évidements longitudinaux (5, 6) comprend une fente (20) traversant le côté extérieur (18) de la conduite de prélèvement (1) et s'étendant au moins sur une partie de l'un des évidements longitudinaux (5, 6).

6. Dispositif de prélèvement de fluide selon l'une quelconque des revendications précédentes, **caractérisé en ce qu'**au moins l'un des éléments de renforcement (15, 16) s'étend à travers un évidement (22) associé à l'évidement longitudinal correspondant (5, 6) et traversant le côté extérieur (18) de la conduite de prélèvement (1).

7. Dispositif de prélèvement de fluide selon l'une quelconque des revendications précédentes, **caractérisé en ce que** le corps de base (3) est fabriqué au moyen d'un procédé de moulage par injection et les éléments de renforcement (15, 16) sont présents de manière surmoulée dans le corps de base (3).

8. Dispositif de prélèvement de fluide selon l'une quelconque des revendications 6 et 7, **caractérisé en ce qu'**un élément de guidage (31) supportant au moins l'un des éléments de renforcement (15, 16) est prévu dans la région de l'évidement (22).

9. Dispositif de prélèvement de fluide selon la revendication 8, **caractérisé en ce que** la conduite de prélèvement (1) est montée sur ou dans l'élément de guidage (21) de manière mobile, en particulier de manière mobile longitudinalement.

10. Dispositif de prélèvement de fluide selon l'une quelconque des revendications 8 et 9, **caractérisé en ce qu'**une saillie (24) de l'élément de guidage (21) vient en prise dans l'évidement (22) pour former une fixation anti-rotation (24).
